# FASCICULE DE BREVET EUROPEEN

(11) **EP 2 313 893 B1**
(45) Date de publication et mention de la délivrance du brevet: **08.02.2012**
(21) Numéro de dépôt: 09784487.2
(22) Date de dépôt: 08.07.2009
(51) Int. Cl.: G21C 1/03, G21C 13/02, G21C 1/02, G21C 9/00

(54) **REACTEUR NUCLEAIRE A NEUTRONS RAPIDES**
SCHNELLER BRÜTREAKTOR
FAST BREEDER REACTOR

(30) Priorité: 16.07.2008 FR 0854839
(43) Date de publication de la demande: 27.04.2011
(73) Titulaire: AREVA NP, 92400 Courbevoie (FR)
(72) Inventeur: CROS, Alain, F-69003 Lyon (FR); FRANCOIS, Gilles, F-38300 Saint Savin (FR)
(74) Mandataire: Lebkiri, Alexandre
(86) Numéro de dépôt international: PCT/FR2009/051355
(87) Numéro de publication internationale: WO 2010/007298

(56) Documents cités:
- EP-A- 0 091 872
- FR-A- 2 246 941
- FR-A- 2 461 335
- FR-A- 2 461 336

## Description

La présente invention concerne un réacteur nucléaire à neutrons rapides (RNR) de type intégré à refroidissement par un métal liquide tel que le sodium. L'invention s'applique plus particulièrement aux RNR de type intégré, ou hybride.

Dans le cadre du Forum International Génération IV les réacteurs nucléaires à neutrons rapides connaissent aujourd'hui un net regain d'intérêt. Les RNR tirent d'abord leur énergie du plutonium. Leur coeur, constitué de plutonium et d'uranium naturel, a une double fonction :
- produire de la chaleur (fission du plutonium) convertie ensuite en électricité ;
- transformer l'uranium naturel ou appauvri (peu fissible) en plutonium (fissible). Les RNR sont qualifiés de « régénérateur» ou de « surrégénérateur » s'ils produisent plus de plutonium qu'ils n'en consomment.

Outre cette double fonction, des recherches sont menées afin d'utiliser ce type de réacteur pour « brûler » des déchets radioactifs à vie longue, transuraniens et actinides, et les transformer en éléments radioactifs à vie courte.

Un RNR est refroidi par un fluide caloporteur constitué par un métal liquide tel que le sodium. Le sodium, à l'état liquide, est un remarquable fluide de refroidissement, grâce notamment à sa température d'ébullition élevée.

De façon connue, un réacteur nucléaire à neutrons rapides de conception classique est formé par :
- une cuve principale renfermant le coeur du réacteur muni des assemblages combustibles ;
- des pompes primaires de mise en circulation du fluide de refroidissement, et ;
- des échangeurs de chaleur intermédiaires destinés à transmettre la chaleur du fluide de refroidissement du réacteur réchauffé au contact du coeur à un fluide secondaire.

Traditionnellement, le supportage du coeur des réacteurs nucléaires à neutrons rapides est assuré par deux structures distinctes permettant de dissocier les fonctions de supportage et d'alimentation en fluide de refroidissement du coeur :
- une première structure mécano-soudée en pression appelée sommier dans laquelle sont positionnés les pieds des assemblages combustibles et qui est alimenté en sodium froid (400°C) par des pompes primaires ;
- une seconde structure mécano-soudée appelé platelage sur lequel le sommier vient en appui ; le platelage prend généralement appui sur une partie de la paroi interne en partie basse de la cuve réacteur.

Les RNR sont répartis suivant deux configurations différentes, caractérisant le mode du circuit primaire :
- les RNR intégrés pour lesquels les pompes primaires et les échangeurs sont entièrement contenus à l'intérieur de la cuve principale renfermant le coeur et sont plongés dans le fluide de refroidissement de ladite cuve principale à travers la dalle de fermeture de cette cuve.
- les RNR partiellement intégrés (« hybrides ») pour lesquels seules les pompes primaires sont contenues à l'intérieur de la cuve principale renfermant le coeur ;
- les RNR dits « à boucles » pour lesquels les pompes primaires et les échangeurs de chaleur intermédiaires sont placés dans des cuves dédiées à l'extérieur de la cuve principale du réacteur qui ne contient plus que le coeur et la structure interne, la cuve principale et la cuve composant étant reliées par des tuyauteries primaires.

La présente invention concerne uniquement les RNR intégrés ou hybrides.

Dans les RNR intégrés, la cuve principale comporte en particulier une cuve interne, formée d'une ou de plusieurs viroles, qui séparent le volume de la cuve principale en un premier volume appelé collecteur chaud recevant le métal liquide échauffé sortant du coeur du réacteur et en un second volume appelé collecteur froid recevant le métal liquide refroidi sortant des échangeurs de chaleurs intermédiaires.

De façon connue, la cuve interne est une structure complexe comportant une virole interne située autour du coeur du réacteur, une virole externe dont le diamètre est généralement un peu inférieur au diamètre de la cuve principale, et au moins un redan reliant la virole interne à la virole externe et qui comporte des ouvertures de traversée permettant de préserver l'étanchéité entre les collecteurs tout en permettant le passage des échangeurs de chaleurs intermédiaires et des pompes primaires.

Depuis le projet SUPERPHENIX, la structure de la cuve interne des RNR a évoluée constamment dans le but de simplifier la structure composant la cuve interne. Ainsi le redan double présent dans le projet SUPERPHENIX a disparu au profit d'un redan simple comportant des traversées d'échangeur de chaleur et de pompe primaire dans les réacteurs de génération suivante tels que les RNR de type EFR (« European Fast Reactor »).

Cependant, cette solution développée dans les réacteurs de type EFR propose une structure interne encore relativement complexe. La forme des redans simples engendre des concentrations de contraintes importantes, et une sensibilité trop importante de la structure au flambage, notamment en cas de séisme.

De plus, dans les RNR intégrés connus de l'art antérieur, les éléments de la structure interne, tels que la cuve interne, le sommier et le platelage, disposés dans la cuve principale sont indémontables, du fait qu'ils sont soudés entre eux lors de la réalisation du bloc réacteur par assemblage sur le site. Seuls certains composants de grandes dimensions tels que les pompes primaires et les échangeurs de chaleur intermédiaires sont réalisés de manière démontable et peuvent être sortis de la cuve par levage au moyen d'équipements spécifiques.

Cependant, le démontage des pompes primaires et des échangeurs de chaleurs intermédiaires ne permet pas de disposer d'un accès au fond de la cuve principale pour la réalisation d'inspections des structures de supportage du coeur et pour la réalisation d'interventions sur le fond de la cuve sans le découpage au préalable des structures composant la structure interne du réacteur nucléaire.

De plus, les corps des pompes primaires sont en communication, dans leur partie inférieure, avec une capacité de refoulement qui est généralement de forme sphérique. Cette capacité sphérique est reliée à deux tuyauteries de refoulement qui débouchent à leur extrémité opposée à l'extrémité reliée à la capacité sphérique, dans le sommier. Le fluide de refroidissement qui est aspiré par la pompe au niveau d'ouïes traversant l'enveloppe de son corps vertical est refoulé dans la capacité sphérique puis réparti dans les tuyauteries de refoulement pour être réinjecté dans le sommier sous les assemblages du coeur. Les tuyauteries latérales de refoulement sont soudées dans la virole externe du sommier : elles sont relativement longues, de l'ordre de 4m dans le cas du projet « EFR » (European Fast Reactor), généralement coudées et reliées à la capacité sphérique par le biais de piquages soudés de part et d'autre du plan radial des sphères. La sphère de refoulement est par ailleurs reliée physiquement au platelage qui doit reprendre les poussées hydrodynamiques appliquées à la sphère et venant du sodium de la pompe (de l'ordre de 150 Tonnes).

Ce type de liaison pompe-sommier, appelée couramment LIPOSO, présente certains inconvénients.

Ainsi, la liaison pompe-sommier est une liaison relativement souple et fortement sollicitée lors de régimes transitoires, notamment lorsque le sodium du collecteur froid (typiquement à 400°C) devient chaud (bouffée chaude à 500°C entraînant une stratification due au repli de débit). Un tel régime thermique particulier génère des déplacements différentiels entre les trois structures (sphère, sommier et platelage) qui sollicitent fortement les tuyauteries de refoulement. Une tuyauterie de plusieurs mètres peut entrainer des déplacements différentiels de plusieurs dizaines de millimètres.

Ces sollicitations à caractères cycliques (environ 200 prévus sur 60 ans) touchent plus particulièrement les zones de piquage tuyauterie/sphère et tuyauterie/sommier qui comportent généralement des soudures au niveau de ces liaisons. Cette disposition constructive est donc susceptible d'entraîner une rupture de la liaison pompe-sommier. En cas de défaut de mode commun, une rupture de deux liaisons pompe-sommier pourrait entraîner une sous-alimentation du coeur et un risque d'accident classé en catégorie 4.

Dans ce contexte, la présente invention vise à fournir un réacteur nucléaire à neutrons rapides comportant une structure interne simplifiée permettant de s'affranchir de l'utilisation de liaisons pompe-sommier fortement sollicitées durant le fonctionnement du réacteur et présentant des risques de rupture.

La présente invention vise à fournir également un réacteur nucléaire à neutrons rapides de type intégré comportant une structure interne simplifiée permettant de limiter la sensibilité au flambage en cas de séisme et facilitant considérablement l'accès au fond de cuve du réacteur nucléaire pour la réalisation d'inspections ou d'interventions dans la cuve principale d'un réacteur nucléaire à neutrons rapides.

A cette fin, l'invention propose un réacteur nucléaire à neutrons rapides comportant une cuve principale renfermant :
- un coeur composé d'assemblages combustibles aptes à être refroidis par un fluide caloporteur,
- des moyens de support dudit coeur,
- une pompe pour la mise en circulation dudit fluide caloporteur dans ladite cuve principale,
ledit réacteur étant caractérisé en ce que lesdits moyens de support comportent un premier orifice pour le passage de ladite pompe, de sorte que ladite pompe refoule ledit fluide caloporteur dans lesdits moyens de support.

Grâce à l'invention, il est possible de simplifier la structure interne d'un réacteur nucléaire à neutrons rapide en s'affranchissant des liaisons pompe-sommier qui sont très fortement sollicitées pendant les transitoires de puissance, notamment lorsque le sodium du collecteur froid (typiquement à 400°C) devient chaud (bouffée chaude à 500°C) et lors des déplacements différentiels des trois structures : pompe primaire, sommier, platelage.

Les concentrations de contraintes situées au droit des piquages des tuyauteries pompe-sommier sont ainsi supprimées ainsi que les risques de rupture simultanée de plusieurs LIPOSOs pouvant conduire à une excursion de puissance non maîtrisée.

L'orifice percé à la périphérie des moyens de support du coeur permet l'introduction du composant présent dans la cuve principale d'un RNR intégré ou hybride, tels que des pompes primaires, de sorte que les pompes mettent en circulation le fluide caloporteur froid dans la cuve principale et refoulent le fluide caloporteur froid dans les moyens de support via une zone de refoulement sans tuyauterie de refoulement.

Selon un mode de réalisation particulièrement avantageux, le réacteur nucléaire à neutrons rapides est un réacteur de type intégré caractérisé en ce que ladite cuve principale renferme un échangeur de chaleur intermédiaire pour le refroidissement dudit fluide caloporteur, ledit échangeur de chaleur comportant :
- une fenêtre d'entrée pour l'entrée dudit fluide caloporteur après son échauffement au contact desdits assemblages combustibles ;
- une fenêtre de sortie pour la sortie dudit fluide caloporteur refroidi par un circuit de refroidissement secondaire ;
lesdits moyens de support traversant de part en part ladite cuve principale de sorte que lesdits moyens de support séparent ladite cuve principale selon :
- un premier volume supérieur dans lequel circule ledit fluide caloporteur après son échauffement au contact desdits assemblages combustibles et ;
- un deuxième volume inférieur dans lequel circule ledit fluide caloporteur avant son échauffement au contact desdits assemblages combustible, ladite pompe aspirant ledit fluide caloporteur dans ledit deuxième volume inférieur ;
lesdits moyens de support comportant un deuxième orifice pour le passage dudit échangeur de chaleur intermédiaire de sorte que ladite fenêtre d'entrée dudit échangeur se trouve dans ledit premier volume supérieur et que ladite fenêtre de sortie se trouve dans ledit deuxième volume inférieur.

Grâce à ce mode de réalisation préférentielle de l'invention, il est possible de simplifier la structure interne d'un réacteur nucléaire à neutrons rapide en s'affranchissant de l'utilisation de redans de séparation du collecteur froid et du collecteur chaud, de formes complexes traversant la cuve principale des RNR de type EFR ou des générations précédentes.

Ainsi, les concentrations de contraintes importantes dues à la forme complexe de cette structure sont supprimées et ainsi que les risques de flambage de la structure interne en cas de séisme.

La séparation du collecteur chaud et du collecteur froid du réacteur nucléaire à neutrons rapides est réalisée par les moyens du support du coeur traversant de part en part la cuve principale. De ce fait, le collecteur chaud est situé dans le volume de la cuve principale se trouvant au dessus des moyens de support coeur et le collecteur froid est situé dans le volume de la cuve principale se trouvant en dessous des moyens de support du coeur.

Des orifices percés à la périphérie des moyens de support du coeur permettent l'introduction des composants présents dans la cuve principale d'un RNR intégré, tels que des pompes et des échangeurs de chaleur, de sorte que l'échangeur de chaleur refoule le fluide caloporteur froid dans le collecteur froid et que la pompe met en circulation le fluide caloporteur froid.

De plus, la disposition particulièrement simplifiée de la cuve réacteur sans redan de séparation collecteur chaud/collecteur froid permet d'améliorer l'accessibilité aux structures de supportage du coeur et en fond de cuve.

Le réacteur nucléaire à neutrons rapides (RNR) à refroidissement par un métal liquide selon l'invention peut également présenter une ou plusieurs des caractéristiques ci-dessous, considérées individuellement ou selon toutes les combinaisons techniquement possibles :
- ledit réacteur comporte en outre un échangeur de chaleur intermédiaire pour le refroidissement dudit fluide caloporteur, ledit échangeur de chaleur comportant :
   - une fenêtre d'entrée pour l'entrée dudit fluide caloporteur après son échauffement au contact desdits assemblages combustibles ;
   - une fenêtre de sortie pour la sortie dudit fluide caloporteur refroidi par un circuit de refroidissement secondaire,
   lesdits moyens de support comportant un deuxième pour le passage dudit échangeur de chaleur intermédiaire ;
- ledit premier orifice et ledit deuxième orifice sont situés sur la périphérie desdits moyens de support ;
- ladite pompe et ledit échangeur de chaleur intermédiaire comportent des moyens d'étanchéité de type joints segment/piston ;
- lesdits moyens de support traversent de part en part ladite cuve principale de sorte que lesdits moyens de support séparent ladite cuve principale selon :
   - un premier volume supérieur dans lequel circule ledit fluide caloporteur après son échauffement au contact desdits assemblages combustibles, et
   - un deuxième volume inférieur dans lequel circule ledit fluide caloporteur avant son échauffement au contact desdits assemblages combustible, ladite pompe aspirant ledit fluide caloporteur dans ledit deuxième volume inférieur ;
- ledit réacteur comporte un échangeur de chaleur intermédiaire pour le refroidissement dudit fluide caloporteur, ledit échangeur de chaleur comportant :
   - une fenêtre d'entrée pour l'entrée dudit fluide caloporteur après son échauffement au contact desdits assemblages combustibles ;
   - une fenêtre de sortie pour la sortie dudit fluide caloporteur refroidi par un circuit de refroidissement secondaire,
   lesdits moyens de support comportant un deuxième orifice pour le passage dudit échangeur de chaleur intermédiaire et ladite fenêtre d'entrée dudit échangeur se trouvant dans ledit premier volume supérieur et ladite fenêtre de sortie se trouve dans ledit deuxième volume inférieur ;
- lesdits moyens de support du coeur sont formés par un platelage, ledit platelage comportant une semelle supérieure sur laquelle un sommier repose en appui ;
- lesdits moyens de support du coeur sont formés par une structure mécano-soudée unique assurant à la fois la fonction de supportage dudit coeur et la fonction d'alimentation dudit coeur en fluide caloporteur, ladite structure comportant une semelle supérieure ;
- ladite structure mécano-soudée unique est formée par une pluralité de viroles concentriques solidarisées par des voiles radiaux formant des entretoises rigidifiant ladite structure mécano-soudée ;
- ladite semelle supérieure sépare de façon étanche ledit premier volume supérieur dudit deuxième volume inférieur ;
- lesdits moyens de support sont en appui sur une bride annulaire solidaire de la partie cylindrique de ladite cuve principale ;
- ladite pompe refoule ledit fluide caloporteur dans une zone de refoulement, ladite zone de refoulement communiquant avec un espace annulaire comportant des orifices en périphérie permettant l'alimentation dudit coeur en fluide caloporteur ;
- ledit réacteur comporte une virole périphérique logée à l'intérieur de ladite cuve principale et délimitant avec la paroi interne de ladite cuve principale un collecteur de forme annulaire dans lequel circule ledit fluide caloporteur, ladite circulation dudit fluide permettant de refroidir ladite cuve principale ;
- ledit réacteur comporte une deuxième virole périphérique délimitant avec ladite virole périphérique un espace annulaire de restitution ;
- ledit espace annulaire de restitution est en communication avec ledit premier volume supérieur ou avec un deuxième espace annulaire délimité par une virole interne solidaire desdits moyens de supports.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 illustre une vue en coupe par un plan vertical de la cuve principale d'un réacteur nucléaire à neutrons rapides de type intégré selon l'invention ;
- la figure 2 illustre une vue en coupe par un plan vertical de la cuve principale d'un réacteur nucléaire à neutrons rapides de type intégré, illustrant un deuxième mode de réalisation de l'invention ;
- la figure 3 illustre une vue en coupe par un plan verticale de la zone d'aspiration et de refoulement de la pompe primaire, illustrée à la figure 1 et 2, d'une cuve principale d'un réacteur nucléaire à neutrons rapides de type intégré selon l'invention ;
- la figure 4 est une vue détaillée de la structure interne de la cuve principale au niveau du circuit de refroidissement de la cuve principale d'un réacteur à neutrons rapides selon l'invention ;
- la figure 5 est une vue en coupe par un plan vertical de la cuve principale illustrant un agencement particulier de la structure interne d'une cuve principale d'un réacteur nucléaire à neutrons rapides selon l'invention ;
- la figure 6 est une vue en coupe par un plan vertical de la cuve principale d'un réacteur nucléaire à neutrons rapides, illustrant un quatrième mode de réalisation de l'invention.

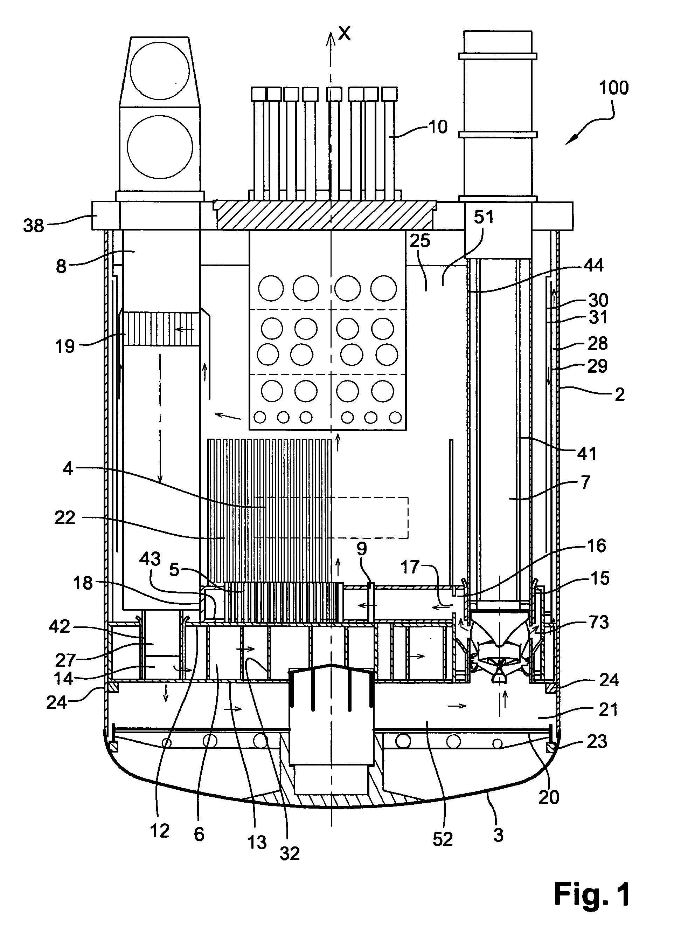

La figure 1 représente une vue en coupe par un plan vertical de la cuve principale d'un réacteur nucléaire à neutrons rapides de type intégré selon un premier mode de réalisation de l'invention.

La cuve principale 100 présente une paroi latérale 2 de forme cylindrique d'axe de symétrie X, un fond bombé 3 et une dalle de fermeture 38 de grande épaisseur.

La cuve principale 100 comporte notamment :
- un coeur 4 formé par des assemblages combustibles 22 refroidis par un fluide caloporteur 25 à métal liquide tel que du sodium ;
- un sommier 5 supportant le coeur 4 ;
- un platelage 6 supportant le sommier 5 ;
- un mécanisme de manutention du combustible 10 ;
- une pompe primaire 7 pour la circulation du fluide caloporteur 25 ;
- un échangeur intermédiaire de chaleur 8 pour le refroidissement du fluide caloporteur 25 qui va transmettre sa chaleur à un fluide caloporteur secondaire non représenté;
- un récupérateur 20 destiné à recevoir les débris du coeur en fusion à la suite d'un accident grave ayant provoqué une élévation suffisante de la température.

Le sommier 5 est une structure mécanosoudée comportant notamment une plaque inférieure 43, une virole périphérique 18 et des chandelles 9 traversant la plaque inférieure 43. Le coeur 4 est formé par des assemblages combustibles 22 dont la partie inférieure ou pied est engagée dans les chandelles 9 du sommier 5.

Le sommier 5 est généralement en appui sur le platelage 6 au moyen de la virole périphérique 18.

Le platelage 6 est une structure mécanosoudée traversant la cuve principale 100 et comportant notamment :
- une pluralité de viroles concentriques 32 ;
- un plateau supérieure 12, appelée semelle supérieure ;
- un plateau inférieure 13, appelée semelle inférieure.

Le platelage 6 repose en appui sur la paroi latérale 2 de la cuve principale 100 par l'intermédiaire d'une bride annulaire 24 solidaire de la paroi latéral 2 de la cuve principale 1.

Le platelage 6 délimite au moyen de sa semelle supérieure 12 un premier espace, appelé collecteur chaud, recevant le fluide caloporteur 25 échauffé au contact des assemblages combustibles 22 et un second espace, appelé collecteur froid, recevant le fluide caloporteur 25 refroidi sortant de l'échangeur intermédiaire de chaleur 8.

Le platelage 6 comporte un premier orifice périphérique 14 traversant la semelle supérieure 12 et la semelle inférieure 13 de façon à permettre l'introduction d'une partie inférieure de l'échangeur de chaleur intermédiaire 8. L'échangeur de chaleur intermédiaire 8 comporte dans sa partie inférieure une fenêtre de sortie 27 pour la sortie du fluide caloporteur 25 qui est refroidi par un circuit de refroidissement secondaire (non représenté) ainsi qu'un moyen permettant d'effectuer une étanchéité lors de l'introduction de l'échangeur de chaleur intermédiaire 8 dans l'orifice périphérique 14 du platelage 6. Dans un premier mode de réalisation de l'invention, une virole cylindrique 42 disposée autour de la fenêtre de sortie 27 supporte des joints de type segment/piston permettant de réaliser l'étanchéité entre le collecteur chaud et le collecteur froid au niveau de l'échangeur de chaleur intermédiaire 8 lors de son encastrement dans le platelage 6 au niveau de son orifice périphérique 14.

De cette façon, le fluide caloporteur 25 froid en sortie d'échangeur de chaleur intermédiaire 8 est injecté dans le fond de cuve 21 de la cuve principale 100 dans un volume situé sous le platelage 6 ainsi qu'en partie basse du platelage 6, c'est-à-dire sous la semelle supérieure 12. Ainsi le fond de cuve 21 fait office de collecteur froid de la cuve principale 100.

Le platelage 6 comporte un deuxième orifice périphérique 15 permettant l'introduction de la partie inférieure de la pompe primaire 7.

Selon un premier mode de réalisation de l'invention, la pompe primaire 7 est une pompe à aspiration axiale et à refoulement latéral. De cette façon, la pompe primaire 7 aspire axialement le fluide caloporteur 25 froid dans le fond de cuve 21 et refoule le fluide 25 latéralement dans une zone de refoulement 73 entourant la pompe primaire 7. La zone de refoulement 73 communique avec un espace annulaire 16 qui est en communication avec le sommier 5 par l'intermédiaire d'orifices 17 percées dans la virole périphérique 18 du sommier 5. Il sera décrit plus tard dans la description un autre de mode de réalisation de l'invention avec une pompe primaire utilisée plus classiquement dans les RNR intégrés, c'est-à-dire une pompe primaire à refoulement axial et à aspiration latérale.

L'introduction de la partie basse de la pompe primaire 7 dans le platelage 6 permet ainsi la suppression des liaisons pompe-sommier (LIPOSO) formées par des tuyauteries de raccordement entre la pompe primaire et le sommier ainsi que des réceptacles de refoulement de forme sphérique recevant le fluide de refroidissement primaire de la pompe primaire.

Dans la zone de refoulement 73, l'espace annulaire 16 et le sommier 5, le fluide caloporteur 25 circule dans une atmosphère haute pression en comparaison avec la pression régnant dans le collecteur chaud et dans le collecteur froid. A titre d'indication la zone de refoulement 73, l'espace annulaire 16 et le sommier 5 sont sous une pression de l'ordre de quelques bars alors que les collecteurs chaud et froid sont sous une pression inférieure à 1 bar.

Le sommier 5 alimente en fluide caloporteur 25 froid les chandelles 9 munies d'orifices calibrés dans lesquelles sont placés les pieds des assemblages 22. Les orifices calibrés permettent d'assurer une répartition convenable du fluide caloporteur 25 dans les différents assemblages combustibles 22. Le fluide caloporteur 25 froid traverse alors le coeur 4 dans la direction verticale et de bas en haut en s'échauffant au contact des assemblages 22 du coeur 4. En traversant les assemblages combustibles 22, le fluide caloporteur 25 s'échauffe à une température moyenne voisine de 550°C.

Le fluide caloporteur 25 chaud pénètre ensuite dans une fenêtre supérieure 19 de l'échangeur de chaleur intermédiaire 8 et se refroidit au contact d'un métal liquide secondaire, en général également constitué par du sodium liquide, afin de ressortir à une température inférieure à sa température d'entrée dans la partie inférieure de l'échangeur de chaleur intermédiaire 8 dans le collecteur froid 52.

Le sodium liquide secondaire échauffé au contact du fluide caloporteur primaire 25 est utilisé pour produire de la vapeur à l'intérieur de générateurs de vapeur situés dans un circuit tertiaire, à l'extérieur de la cuve principale 100.

La cuve principale 100 est refroidie par la circulation du fluide caloporteur 25 froid dans un collecteur annulaire 28 délimité d'une part par la paroi latérale 2 de la cuve principale 1 et d'autre part par une virole déversoir 29 soudé en partie basse à la périphérie du platelage 6. Le collecteur annulaire 28 est alimenté en fluide caloporteur 25 froid en partie basse par un prélèvement à débit calibré de fluide caloporteur 25 dans la zone de refoulement 73 entourant la pompe primaire 7. Le prélèvement de débit est rendu possible par la présence d'une haute pression dans la zone de refoulement 73.

La calibration du débit est réalisée par des débitmètres à orifices déprimogènes de façon à obtenir une pression suffisamment importante pour permettre la circulation du fluide caloporteur 25 dans le collecteur annulaire 28 et pour permettre la circulation du fluide dans un espace annulaire de restitution 31 créé par la présence d'une virole supplémentaire 30, dite virole de restitution, soudé à la virole déversoir 29.

L'espace annulaire de restitution 31 permet de diriger le fluide caloporteur 25 froid circulant dans le collecteur annulaire 28 dans une zone du collecteur chaud déterminée où la température est sensiblement du même ordre de grandeur que la température du fluide caloporteur 25 en sortie de l'espace annulaire de restitution 31, c'est-à-dire environ 430°C. De cette façon, on réduit les risques de faïence thermique par fluctuation de température (Thermal Stripping, en langue anglaise) et on participe au maintien à basse température des parties supérieures du supportage coeur.

Dans le mode de réalisation représenté à la figure 1, le fluide caloporteur 25 de l'espace annulaire de restitution 31 est injecté dans le collecteur chaud 51 sous le plan médian du coeur 4.

Dans un deuxième mode de réalisation non représenté, il est possible de diriger le fluide caloporteur en sortie de l'espace annulaire de restitution dans le collecteur froid au moyen d'une tuyauterie reliant l'espace annulaire de restitution et le collecteur froid, notamment dans le platelage 6 comportant du fluide caloporteur 25 froid. Dans ce cas, la tuyauterie dirige le fluide caloporteur 25 dans le platelage 6 au niveau de la fenêtre de sortie 27 de l'échangeur intermédiaire 8.

La pompe primaire 7 comporte un corps vertical 41 de forme globalement cylindrique, placé à l'intérieur d'une cheminée 44 portée par la pompe 7, renfermant les éléments actifs de la pompe 7. La cheminée 44 formé d'une virole cylindrique protège les éléments actifs de la pompe 7, notamment l'arbre de la pompe du fluide caloporteur 25 chaud.

Dans le type de réacteur à neutrons rapides dont la construction est prévue dans l'avenir, la cuve 100 renferme trois pompes 7 identiques placées dans une zone annulaire à la périphérie de la cuve 1.

La partie supérieure du corps 41 de la pompe 7 traverse la dalle de fermeture 38 horizontale du réacteur fermant la cuve 100 et se trouve fixée à cette dalle qui assure la suspension de la pompe 7.

L'étanchéité entre le collecteur chaud 51 et le collecteur froid 52 au niveau de l'encastrement de la partie basse de la pompe 7 est réalisée à deux niveaux. Une première étanchéité est réalisée entre le collecteur chaud et l'espace annulaire 16 en haute pression au moyen de joints de type segment/piston au niveau de la semelle supérieure 12 du platelage 6. Une seconde étanchéité est réalisée entre le collecteur froid et l'espace annulaire 16 en haute pression au moyen également de joints de type segment/piston au niveau de la semelle inférieure 13 du platelage 6.

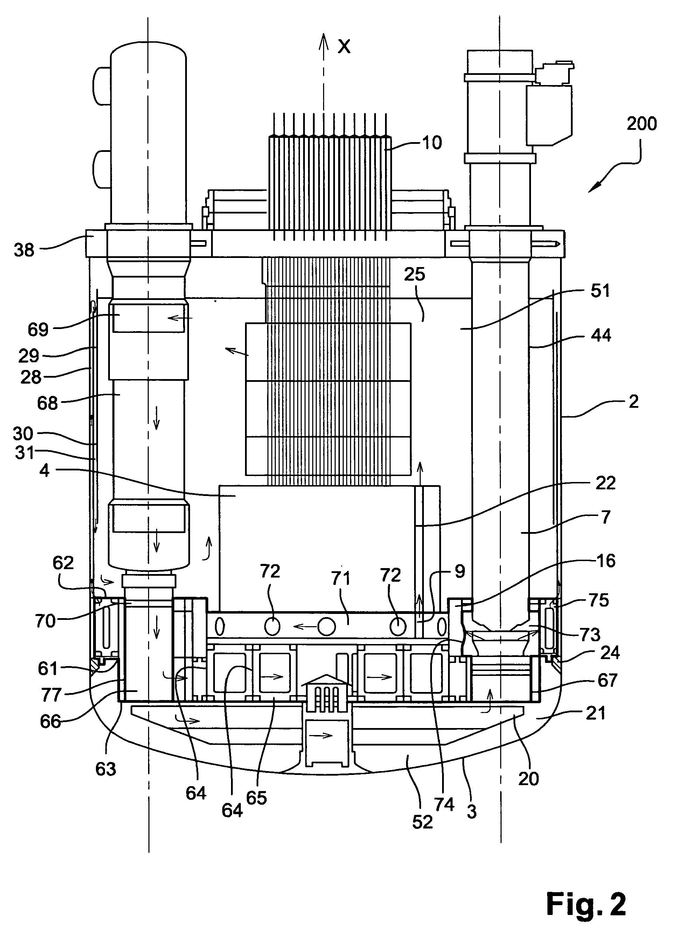

La figure 2 est une vue en coupe par un plan vertical de la cuve principale d'un réacteur nucléaire à neutrons rapides de type intégré, illustrant un deuxième mode de réalisation de l'invention.

La cuve principale 200 selon la figure 2 reprend les principales caractéristiques de la structure interne de la cuve principale 100 décrites précédemment. Il sera détaillé dans ce qui suit les éléments différents qui sont propres à ce deuxième mode de réalisation. Les éléments en communs entre la figure 1 et la figure 2 (et réalisant la même fonction) portent les mêmes numéros de référence.

Dans ce deuxième mode de réalisation, le supportage du coeur 4 du RNR est réalisé au moyen d'une structure unique mécano-soudée 61, appelée structure SPI (Sommier Platelage Intégré) reposant sur la bride annulaire 24 solidaire de la paroi latéral 2 de la cuve principale 1, dans sa partie basse et traversant de part et d'autre la cuve principale 200.

Cette structure SPI assure à la fois la fonction de supportage du coeur 4 du réacteur nucléaire et la fonction d'alimentation du coeur 4 en fluide caloporteur 25, réalisées par l'ensemble des structures mécano-soudés platelage 6 et sommier 5 illustrées en référence à la figure 1.

Cette structure permet de contenir la structure peu rigide du sommier 5, illustré en référence à la figure 1, dans un ensemble mécano-soudée rigide, limitant ainsi les risques de distorsion par relaxation des contraintes résiduelles, essentiellement de soudage, de la partie sommier lors du fonctionnement du réacteur, et notamment en cas de transitoires ou de chocs thermiques.

La structure SPI 61 est une structure comportant un arrangement d'une pluralité de caissons bordés par une semelle supérieure 62 et une semelle inférieure 63, la semelle inférieure 63 étant suffisamment ajourée pour permettre une bonne circulation du sodium entre les caissons inférieurs et le fond de la cuve principale.

La semelle supérieure 62 supporte le coeur 4 et comporte des orifices calibrés ou chandelles 9, de sorte que la partie inférieure des assemblages combustibles 22 formant le coeur 4 du réacteur soit engagée dans les chandelles 9 de la structure SPI 61.

Un caisson périphérique 75 maintient l'ensemble de la structure SPI 61 et repose sur la bride annulaire 24 solidaire de la cuve principale 200.

La partie basse de la structure SPI 61 comporte une pluralité de viroles concentriques 64 solidarisées par des voiles radiaux 65 formant des entretoises de rigidification de la structure SPI 61 pour limiter la flèche de cette dernière et formant des entretoises de fixation de la semelle inférieure 63.

Avantageusement, la structure SPI 61 est formée par six viroles concentriques 64 entretoisées par douze lignes de voiles radiaux 65 équidistants de 30°, les voiles radiaux 65 étant ajourés pour permettre la circulation du sodium entre les caissons.

La structure SPI 61 et plus précisément la semelle supérieure 62 de la structure SPI délimite le volume de la cuve principale 200 en un premier volume, le collecteur chaud 51, recevant le fluide caloporteur 25 échauffé au contact des assemblages combustibles 22 et un second volume, le collecteur froid 52, recevant le fluide caloporteur 25 refroidi sortant de l'échangeur de chaleur intermédiaire 68.

La structure SPI 61 comporte un premier orifice périphérique 66 traversant la semelle supérieure 62 et la semelle inférieure 63 de façon à permettre l'introduction d'une partie inférieure de l'échangeur intermédiaire de chaleur 68.

Préférentiellement, l'échangeur de chaleur intermédiaire 68 est un échangeur de chaleur intermédiaire à débit inversé, aspirant le fluide caloporteur 25 chaud latéralement en partie supérieure par une fenêtre d'entrée 69 et refoulant en partie inférieure le fluide caloporteur 25 froid axialement à travers la structure SPI 61 au moyen d'une fenêtre de sortie 70. Cependant, l'utilisation d'un échangeur de chaleur classique dont la fenêtre de sortie débouche à l'intérieur de la structure SPI 61 et dont le fluide caloporteur 25 froid sort latéralement est également possible avec la représentation de la structure SPI 61.

De cette façon, le fluide caloporteur 25 froid en sortie d'échangeur de chaleur intermédiaire 68 est injecté dans le fond de cuve 21 dans un volume situé sous la structure SPI 61 par le biais d'une traversée tubulaire 77 verticale soudée dans la structure SPI 61. Le fond de cuve 21, ainsi que la partie basse de la structure SPI 61 font office de collecteur froid de la cuve principale 200 et reçoivent par conséquent le fluide caloporteur 25 froid.

L'étanchéité entre le collecteur chaud 51 et le collecteur froid 52 en fond de cuve est réalisé par un dispositif porte joint auto-ajustable appartenant à l'échangeur de chaleur intermédiaire 68 et comprenant en extrémité des joints métalliques de type joints segment/piston.

La structure SPI 61 comporte un deuxième orifice périphérique 67 permettant l'introduction de la partie inférieure de la pompe primaire 7 à aspiration axiale.

La pompe primaire 7 refoule latéralement le fluide caloporteur 25 froid dans une zone de refoulement 73 entourant la pompe primaire 7 prévu à l'intérieur de l'orifice périphérique 67 de la structure SPI 61. La zone de refoulement 73 communique avec un espace annulaire 16 communiquant lui-même avec un caisson supérieur 71, situé en partie supérieure de la structure SPI 61. Le passage du fluide caloporteur 25 froid de l'espace annulaire 16 au caisson supérieur 71 est réalisé au moyen d'orifice périphérique 72 présent sur la virole périphérique du caisson supérieur 71.

De façon similaire à la description faite en référence à la figure 1, le caisson supérieur 71 alimente en fluide caloporteur 25 froid les chandelles 9 munis d'orifices calibrés dans lesquelles sont placés les pieds des assemblages 22. Les orifices calibrés assurent la répartition convenable du fluide caloporteur 25 dans les différents assemblages combustibles 22. Le fluide caloporteur 25 froid traverse alors le coeur 4 dans la direction verticale et de bas en haut en s'échauffant au contact des assemblages 22 du coeur 4. En traversant les assemblages combustibles 22, le fluide caloporteur 25 s'échauffe à une température moyenne voisine de 550 °C.

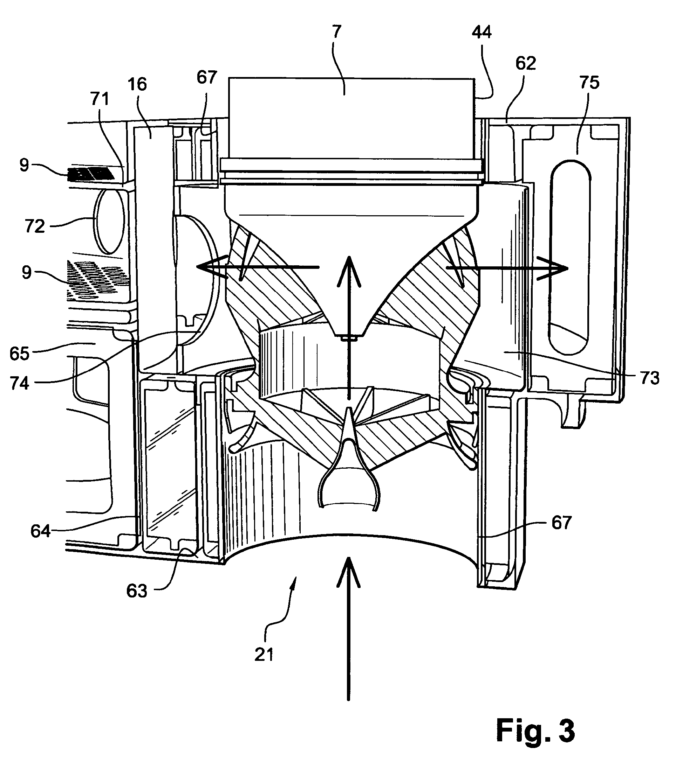

La figure 3 est une vue en coupe par un plan verticale de la zone d'aspiration axiale et de refoulement de la pompe primaire 7 illustrée dans le cas de la figure 1 et 2, d'une cuve principale d'un réacteur nucléaire à neutrons rapides de type intégré selon l'invention.

La figure 3 permet d'illustrer plus précisément la circulation du fluide caloporteur 25 froid présent dans le collecteur froid 52 en fond de cuve 21 jusqu'à l'introduction dans le caisson supérieur 71 pour l'alimentation en fluide caloporteur 25 du coeur 4.

Ainsi, le fluide caloporteur 25 en fond de cuve 21 est aspiré axialement, c'est-à-dire verticalement de bas en haut sur la représentation de la figure 3, et est refoulé latéralement dans la zone de refoulement 73 entourant la partie basse de la pompe primaire 7.

Le fluide caloporteur 25 refoulé dans la zone de refoulement 73 annulaire pénètre de la zone de refoulement 73 à l'espace annulaire 16 au moyen d'un orifice 74. L'espace annulaire 16 borde la périphérie du caisson supérieur 71 et la virole de séparation entre le caisson supérieur 71 et l'espace annulaire 16 comporte des orifices 72, de sorte que le fluide caloporteur 25 froid pénètre dans le caisson supérieur 71 de la structure SPI 61.

De façon connue, le fluide caloporteur 25 froid s'échauffe ensuite au contact des assemblages combustibles 22 dont les pieds sont engagés dans les chandelles 9 de la structure SPI 61.

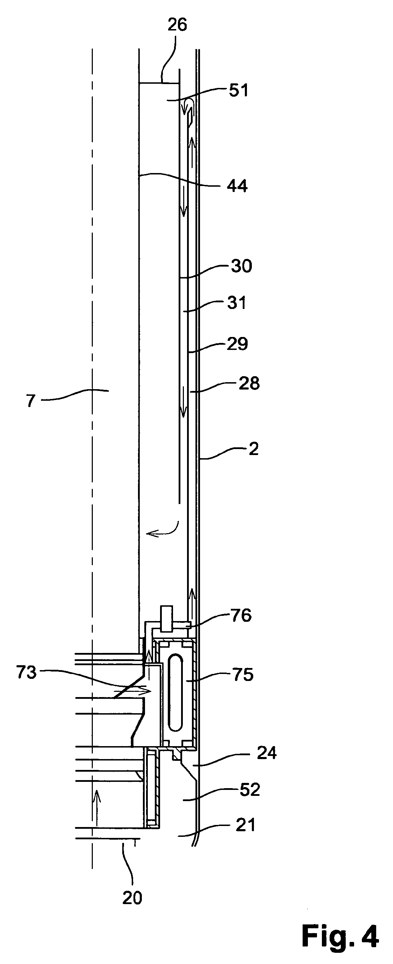

La figure 4 est une vue détaillée de la structure interne de la cuve principale 100, 200, illustrée à la figure 1 et à la figure 2, au niveau du circuit de refroidissement de la cuve d'un réacteur à neutrons rapides selon l'invention.

La figure 4 illustre particulièrement un mode d'alimentation du collecteur annulaire 28 du circuit de refroidissement en fluide caloporteur 25 froid. Le collecteur annulaire 28 est alimenté en fluide caloporteur 25 froid en partie basse par un prélèvement à débit calibré de fluide caloporteur 25 de la zone de refoulement 73 de la pompe primaire 7.

Le prélèvement de débit est rendu possible par la présence d'une haute pression la zone de refoulement 73.

L'alimentation du collecteur annulaire 28 est réalisée au moyen de tuyauteries de liaison 76 connectées sur la partie supérieure du platelage 6 ou de la structure SPI 61 dans une partie haute pression. Le débit est calibrée par des débitmètres à orifices déprimogènes de façon à obtenir une pression suffisamment importante pour permettre la circulation du fluide caloporteur 25 dans le collecteur annulaire 28 et pour permettre la circulation du fluide caloporteur dans l'espace annulaire de restitution 31 créé par la virole de restitution 30, soudé à la virole déversoir 29. Le principe de circulation du fluide caloporteur 25 dans le circuit de refroidissement à partir de la zone de refoulement 73 de la pompe primaire 7 est représenté sur la figure 4 au moyen de flèches.

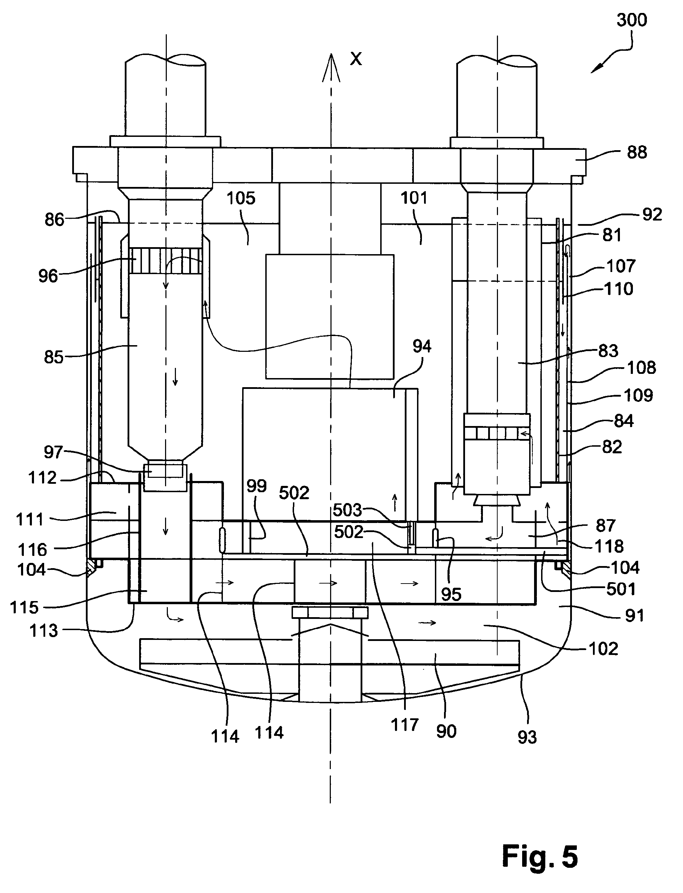

La figure 5 est une vue en coupe par un plan vertical de la cuve principale illustrant un agencement particulier de la structure interne.

La cuve principale 300 présente une paroi latérale 92 de forme cylindrique d'axe de symétrie X, un fond bombé 93 et une dalle de fermeture 88 de grande épaisseur.

La cuve principale 300 comporte notamment :
- un coeur 94 formé par des assemblages combustibles refroidis par un fluide caloporteur 105 à métal liquide tel que du sodium ;
- une structure unique mécano-soudée 111, appelée structure SPI (Sommier Platelage Intégré) ;
- une pompe primaire 83 pour la mise en circulation du fluide caloporteur 105 dans la cuve principale 300 ;
- un échangeur de chaleur intermédiaire 85 pour le refroidissement du fluide caloporteur 105 qui va transmettre sa chaleur à un fluide caloporteur secondaire (non représenté);
- un récupérateur 90 destiné à recevoir les débris du coeur en fusion à la suite d'un accident grave ayant provoqué une élévation suffisante de température.

La structure SPI 111 repose sur une bride annulaire 104 solidaire de la paroi latérale 92 de la cuve principale 300, dans sa partie basse, et traverse de part en part la cuve principale 300.

Cette structure SPI assure à la fois la fonction de supportage du coeur 94 du réacteur nucléaire et la fonction d'alimentation du coeur 94 en fluide caloporteur 105, réalisées par l'ensemble des structures mécano-soudés platelage 6 et sommier 5 illustrées en référence à la figure 1.

Cette structure permet de contenir la structure peu rigide du sommier 5, illustré en référence à la figure 1, dans un ensemble mécano-soudée rigide, limitant ainsi les risques de distorsion par relaxation des contraintes résiduelles, essentiellement de soudage, de la partie sommier lors du fonctionnement du réacteur, et notamment en cas de transitoires ou de chocs thermiques.

La structure SPI 111 est une structure comportant un arrangement d'une pluralité de caissons bordés par une semelle supérieure 112 et une semelle inférieure 113, la semelle inférieure 113 étant suffisamment ajourée pour permettre une bonne circulation du sodium entre les caissons inférieurs et le fond de la cuve principale.

La semelle supérieure 112 supporte le coeur 94 et comporte des orifices calibrés ou chandelles 99, de sorte que la partie inférieure des assemblages combustibles formant le coeur 94 du réacteur soit engagée dans les chandelles 99 de la structure SPI 111.

Un caisson périphérique 118 maintient l'ensemble de la structure SPI 111 et repose sur la bride annulaire 104 solidaire de la cuve principale 300.

La partie basse de la structure SPI 111 comporte une pluralité de viroles concentriques 114 solidarisées par des voiles radiaux (non représentés) formant des entretoises de rigidification de la structure SPI 111 pour limiter la flèche de cette dernière et formant des entretoises de fixation de la semelle inférieure 113.

Avantageusement, la structure SPI 111 est formée par six viroles concentriques 114 entretoisées par douze lignes de voiles radiaux équidistants de 30°, les voiles radiaux étant ajourés pour permettre la circulation du sodium entre les caissons.

La structure SPI 111 et plus précisément la semelle supérieure 112 de la structure SPI délimite le volume de la cuve principale 300 en un premier volume, le collecteur chaud 101, recevant le fluide caloporteur 105 échauffé au contact des assemblages combustibles et un second volume, le collecteur froid 102, recevant le fluide caloporteur 105 refroidi sortant de l'échangeur de chaleur intermédiaire 85.

La structure SPI 111 comporte un premier orifice périphérique 115 traversant la semelle supérieure 112 et la semelle inférieure 113 de façon à permettre l'introduction d'une partie inférieure de l'échangeur intermédiaire de chaleur 85.

Préférentiellement, l'échangeur de chaleur intermédiaire 85 est un échangeur de chaleur intermédiaire à débit inversé, aspirant le fluide caloporteur 105 chaud latéralement en partie supérieure par une fenêtre d'entrée 96 et refoulant en partie inférieure le fluide caloporteur 105 froid axialement à travers la structure SPI 111 au moyen d'une fenêtre de sortie 97. Cependant, l'utilisation d'un échangeur de chaleur classique dont la fenêtre de sortie débouche à l'intérieur de la structure SPI 111 et dont le fluide caloporteur 105 froid sort latéralement est également possible avec la représentation de la structure SPI 111.

De cette façon, le fluide caloporteur 105 froid en sortie d'échangeur de chaleur intermédiaire 85 est injecté dans le fond de cuve 91 dans un volume situé sous la structure SPI 111 par le biais d'une traversée tubulaire 116 verticale soudée dans la structure SPI 111. Le fond de cuve 91, ainsi que la partie basse de la structure SPI 111 sont utilisés comme le collecteur froid de la cuve principale 300 et reçoivent par conséquent le fluide caloporteur 105 froid.

L'étanchéité entre le collecteur chaud 101 et le collecteur froid 102 en fond de cuve est réalisé par un dispositif flottant appartenant à l'échangeur de chaleur intermédiaire 85 et comprenant en extrémité des joints métalliques de type joints segment/piston.

Dans ce mode de réalisation, la circulation d'un fluide caloporteur 105 froid, présent en fond de cuve 91, est réalisée au moyen de la pompe primaire 83 aspirant latéralement le fluide caloporteur dans une structure SPI 111.

Pour cela, une cheminée 81 est soudée sur une semelle supérieure 112 de la structure SPI 111 de façon à isoler la pompe 83 du collecteur chaud 101 et à créer autour de la pompe primaire un collecteur contenant du fluide caloporteur 105 froid afin d'être aspirer par la pompe primaire 83 latéralement.

Le niveau en fluide caloporteur 105 froid à l'intérieur de la cheminée 81 est inférieur au niveau 86 de fluide caloporteur 105 chaud du collecteur chaud 101 et la cheminée 81 débouche au dessus de cette limite 86 du fluide caloporteur 105 chaud afin d'assurer l'étanchéité entre le collecteur chaud 101 et le collecteur froid 102.

La pompe primaire 83 refoule axialement le fluide caloporteur 105 froid dans une zone de refoulement 87 située en partie supérieure de la structure SPI 111, la partie inférieure et la partie périphérique de la structure SPI 111 étant parcourues par le fluide caloporteur 105 sortant de l'échangeur de chaleur intermédiaire 85.

Dans la zone de refoulement 87, le fluide caloporteur 105, en sortie de pompe 83, circule dans une atmosphère haute pression en comparaison avec la pression régnant dans le collecteur chaud 101 et dans le collecteur froid 102. A titre d'indication, la zone de refoulement 87 et le caisson supérieur 117 sont sous une pression de l'ordre de quelques bars alors que les collecteurs chaud et froid sont sous une pression inférieure à 1 bar.

Dans le type de réacteur à neutrons rapides dont la construction est prévue dans l'avenir, la cuve 300 renferme trois pompes 83 identiques placées dans une zone annulaire à la périphérie de la cuve 300.

La circulation du fluide caloporteur 105 dans le caisson supérieur 117 jusqu'au collecteur chaud 101 reste identique aux descriptions faites précédemment en référence à la figure 1 et à la figure 2.

Le caisson supérieur 117 alimente en fluide caloporteur 105 froid les chandelles 99 munis d'orifices calibrés dans lesquelles sont placés les pieds des assemblages combustibles du coeur 94. Les orifices calibrés permettent d'assurer une répartition convenable du fluide caloporteur 105 dans les différents assemblages combustibles. Le fluide caloporteur 105 froid traverse alors le coeur 94 dans la direction verticale et de bas en haut en s'échauffant au contact des assemblages. En traversant les assemblages combustibles, le fluide caloporteur 105 s'échauffe à une température moyenne voisine de 550°C.

Le fluide caloporteur 105 chaud pénètre ensuite dans la fenêtre supérieure 96 de l'échangeur de chaleur intermédiaire 85 et se refroidit au contact d'un métal liquide secondaire, en général également constitué par du sodium liquide, afin de ressortir à une température inférieure à sa température d'entrée dans la partie inférieure de l'échangeur de chaleur intermédiaire 85 dans le collecteur froid 102.

Le sodium liquide secondaire échauffé au contact du fluide caloporteur primaire 105 est utilisé pour produire de la vapeur à l'intérieur de générateurs de vapeur situés dans un circuit tertiaire, à l'extérieur de la cuve principale 300.

La cuve principale 300 est refroidie par la circulation du fluide caloporteur 105 froid dans un collecteur annulaire 108 délimité d'une part par la paroi latérale 92 de la cuve principale 300 et d'autre part par une virole déversoir 109 soudé en partie basse à la périphérie de la structure SPI 111.

Le collecteur annulaire 108 est alimenté en fluide caloporteur 105 froid en partie basse par un prélèvement à débit calibré de fluide caloporteur 105 dans une zone haute pression comportant le fluide caloporteur 105 froid de la structure SPI 111. Généralement, le collecteur annulaire 108 est alimenté par un prélèvement réalisé par des tuyauteries 501 au niveau d'une zone moyenne pression 502 située au niveau de la semelle inférieure du caisson supérieur 117. La calibration du débit est réalisée par une fuite au niveau des pieds d'assemblages 503 du coeur 94 de façon à obtenir une pression suffisamment importante pour permettre la circulation du fluide caloporteur 105 dans le collecteur annulaire 108 et pour permettre la circulation du fluide dans un espace annulaire de restitution 107 créé par la présence d'une virole supplémentaire 110, dite virole de restitution, soudé à la virole déversoir 109.

Dans cette représentation, le fluide caloporteur 105 se déverse dans un second collecteur annulaire 84 crée par une virole interne 82 de faible épaisseur soudée sur la partie périphérique de la structure SPI 111 traversant la cuve principale 300. La virole interne 82 est une virole entourant les composants de la cuve principale 300 tels que la pompe primaire 83 et l'échangeur intermédiaire de chaleur 85 et ne comportant aucune discontinuité géométrique.

La virole interne 82 fait office de séparateur entre le collecteur chaud 101 et le collecteur froid 102.

Le second espace annulaire 84 froid communique avec le fond de cuve 91. L'ajout de ce second collecteur annulaire 84 permet de diminuer les contraintes dues à la présence de fort gradient de température entre le collecteur chaud 101 et le collecteur froid 102.

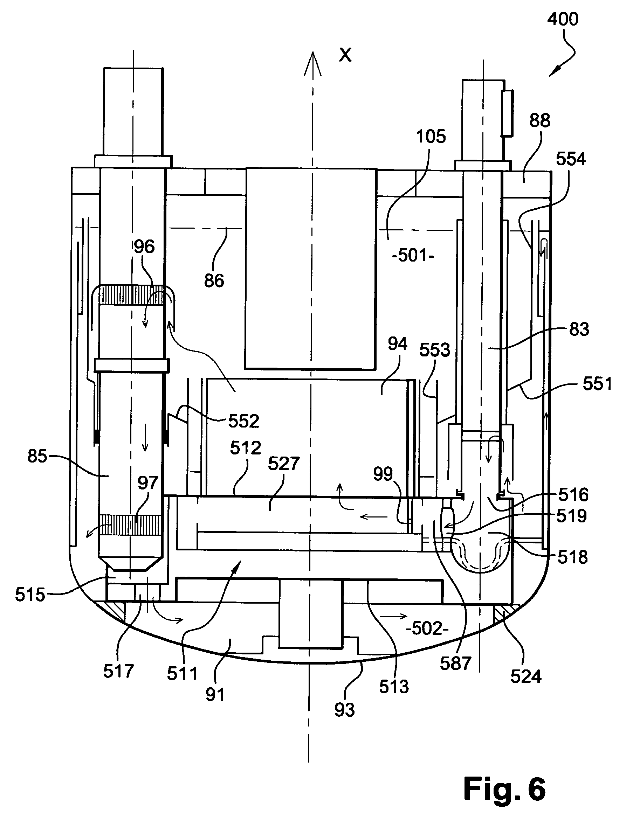

La figure 6 est une vue en coupe par un plan vertical de la cuve principale 400 d'un réacteur nucléaire à neutrons rapides, illustrant un quatrième mode de réalisation de l'invention.

La cuve principale 400 selon la figure 6 reprend les principales caractéristiques de la structure interne de la cuve principale 300 décrites précédemment. Il sera détaillé dans ce qui suit les éléments différents qui sont propres à ce quatrième mode de réalisation. Les éléments en communs entre la figure 5 et la figure 6 (et réalisant la même fonction) portent les mêmes numéros de référence.

Dans ce quatrième mode de réalisation, la structure unique mécano-soudée SPI 511 est une structure reposant sur un forgé annulaire 524 solidaire du fond bombé 93 de la cuve principale 400.

Des plaquettes comportant un revêtement dur sont insérées dans le forgé annulaire 524 de façon à minimiser le grippage entre la structure SPI 511 et le forgé annulaire 524 et à régler l'assiette de la structure SPI lors des remontages.

La structure 511 est centrée diamétralement par un pivot central et bloquée en rotation par une clavette anti-rotation dans la zone d'appui périphérique, permettant ainsi à la structure 511 de se dilater librement sous l'effet des contraintes thermiques.

De façon identique à la description précédente, la structure SPI 511 assure la fonction de supportage du coeur 94 du réacteur nucléaire et la fonction d'alimentation du coeur 94 en fluide caloporteur 105, réalisées par l'ensemble des structures mécano-soudés platelage 6 et sommier 5 illustrées en référence à la figure 1.

La structure SPI 511 est également une structure comportant un arrangement d'une pluralité de caissons bordés par une semelle supérieure 512 et une semelle inférieure 513, la semelle inférieure 513 étant suffisamment ajourée pour permettre une bonne circulation du fluide caloporteur 105 froid entre les caissons inférieurs et le fond 91 de la cuve principale 400.

La partie basse de la structure SPI 511 comporte une pluralité de viroles concentriques (non représentées) solidarisées par des voiles radiaux (non représentés) formant des entretoises de rigidification de la structure SPI 511 pour limiter la flèche de cette dernière et formant des entretoises de fixation de la semelle inférieure 513.

La semelle supérieure 512 supporte le coeur 94 et comporte des orifices calibrés ou chandelles 99, de sorte que la partie inférieure des assemblages combustibles formant le coeur 94 du réacteur soit engagée dans les chandelles 99 de la structure SPI 511.

La structure SPI 511 comporte un premier embrèvement périphérique 515 traversant la semelle supérieure 512 au droit de l'échangeur de chaleur intermédiaire 85 de façon à créer un espace vide pour l'introduction de la partie inférieure de l'échangeur 85.

La structure SPI 511 comporte également un orifice 516 apte à l'introduction de joints flottants de la pompe primaire 83.

Dans ce mode de réalisation, la structure interne de la cuve principale 400 comporte une virole interne 553 située autour du coeur 94, une virole externe 554, de diamètre un peu inférieur au diamètre de la cuve principale 400, et des redans 551, 552 reliant la virole interne 553 à la virole externe 554 et qui comportent des ouvertures de traversée permettant de préserver l'étanchéité entre le collecteur chaud 501, recevant le fluide caloporteur 105 échauffé au contact des assemblages combustibles, et le collecteur froid 502, recevant le fluide caloporteur 105 refroidi sortant de l'échangeur de chaleur intermédiaire 85, tout en permettant le passage des échangeurs de chaleurs intermédiaires 85 et des pompes primaires 83.

Préférentiellement, l'échangeur de chaleur intermédiaire 85 est un échangeur de chaleur intermédiaire classique, aspirant le fluide caloporteur 105 chaud latéralement en partie supérieure par la fenêtre d'entrée 96 et refoulant en partie inférieure le fluide caloporteur 105 froid latéralement dans le collecteur froid 502 et au travers de la structure SPI 511 au moyen de la fenêtre de sortie 97.

De cette façon, le fluide caloporteur 105 froid en sortie d'échangeur de chaleur intermédiaire 85 est injecté dans le fond de cuve 91 dans un volume situé sous la structure SPI 511 par le biais d'une traversée tubulaire 517 verticale soudée dans la structure SPI 511. Le fond de cuve 91, ainsi que la partie basse de la structure SPI 511 sont utilisés comme le collecteur froid de la cuve principale 400 et reçoivent par conséquent le fluide caloporteur 105 froid.

Dans ce mode de réalisation, la circulation du fluide caloporteur 105 froid, présent en fond de cuve 91, est réalisée au moyen de la pompe primaire 83 aspirant latéralement le fluide caloporteur 105 dans le collecteur froid 502 et refoulant le fluide caloporteur 105 dans la structure SPI 511 via un réceptacle de refoulement 518 soudé dans la structure SPI 511 et relié à un caisson périphérique 587 situé autour de la partie supérieure 527 de la structure SPI 511 par le biais de trois manchettes forgées 519.

Dans le réceptacle de refoulement 518 et le caisson périphérique 587, le fluide caloporteur 105, en sortie de pompe 83, circule dans une atmosphère haute pression en comparaison avec la pression régnant dans le collecteur chaud 501 et dans le collecteur froid 502. A titre d'indication, le réceptacle de refoulement 518 et la partie supérieure 527 sont sous une pression de l'ordre de quelques bars alors que les collecteurs chaud et froid sont sous une pression inférieure à 1 bar.

L'étanchéité entre le collecteur chaud 501 et le collecteur froid 502 est réalisée par la structure interne et notamment par les redans 551, 552 traversant. Au niveau du redan 552, l'étanchéité est réalisée par un dispositif flottant appartenant à l'échangeur de chaleur intermédiaire 85.

Ainsi, l'invention a pour objet un réacteur nucléaire à neutrons rapides dont l'architecture particulière permet de s'affranchir de l'utilisation d'une structure interne comportant une virole interne, une virole externe et des redans traversant la cuve principale du réacteur comportant des cheminées de traversée des pompes et des échangeurs de chaleur. La séparation entre le collecteur chaud et le collecteur froid est réalisée au moyen d'un supportage du coeur transverse pouvant être un platelage transverse ou une structure SPI traversant la cuve interne et reposant sur une bride annulaire solidaire de la paroi latérale de la cuve principale. Le fond de la cuve principale du réacteur à neutrons rapides de type intégré ainsi que le volume occupé sous le redan sont utilisés comme le collecteur froid du réacteur. Le volume situé au dessus de la structure de supportage du coeur est utilisé comme collecteur chaud.

Dans le type de réacteur à neutrons rapides dont la construction est prévue dans l'avenir, la cuve réacteur renferme trois pompes et six échangeurs de chaleur intermédiaires identiques placés dans une zone annulaire à la périphérie de la cuve principale du réacteur.

Bien entendu, l'invention n'est pas limitée au mode de réalisation qui vient d'être décrit.

Même si l'invention a été plus particulièrement décrite en référence aux réacteurs nucléaires à neutrons rapides de type intégré, elle s'applique également aux réacteurs nucléaires à neutrons rapides de type hybride pour lesquels seules les pompes primaires (et pas les échangeurs) sont contenues à l'intérieur de la cuve principale renfermant le coeur.

L'invention est applicable aux réacteurs nucléaires à neutrons rapides de type intégrés équipés d'échangeurs de chaleur intermédiaires dits classiques, tels que par exemple les échangeurs de chaleur du type EFR, ou encore d'échangeurs de chaleur à débit inversés.

L'invention est applicable aussi bien aux réacteurs nucléaires à neutrons rapides de type intégrés équipés de pompes primaires à aspiration latérale qu'aux aux réacteurs nucléaires à neutrons rapides de type intégrés équipés de pompes primaires à aspiration axiale.

Enfin l'invention est applicable aussi bien avec un arrangement interne classique sommier reposant sur un platelage, le platelage reposant sur une bride annulaire qu'avec une structure intégrée permettant de disposer d'une structure unique pour le maintien et l'alimentation du coeur du réacteur nucléaire.

Les autres avantages de l'invention sont notamment les suivants :
- augmentation significative de la compacité de la cuve principale ;
- réduction des coûts de réalisation du fait de la simplification de la structure interne ;
- le sommier est alimenté en périphérie sans piquage par des orifices dans la virole externe ;
- les cheminées de traversées d'échangeur de chaleur sont supprimées ;
- simplification du système de refroidissement de la cuve principale ;
- amélioration de l'accessibilité en fond de cuve ;
- amélioration de l'accessibilité aux structures de supportage du coeur ;
- augmentation significative du volume relatif du collecteur chaud.

Il convient de noter que le réacteur à neutrons rapides décrit en référence à la figure 2 est du type intégré ; en d'autres termes, les pompes primaires et les échangeurs sont entièrement contenus à l'intérieur de la cuve principale renfermant le coeur.

Il est cependant parfaitement possible d'utiliser la structure intégré SPI dans d'autres types de réacteurs à neutrons rapides tels que les réacteurs à boucles ou hybrides. Bien entendu, dans un réacteur RNR à boucles, les pompes primaires et les échangeurs de chaleur intermédiaires sont placés dans des cuves dédiées à l'extérieur de la cuve principale du réacteur qui ne contient plus que le coeur, et les moyens de supportage du coeur, c'est-à-dire la structure SPI et les autres structures internes. Dans une telle configuration, la structure SPI et notamment la semelle supérieure et la semelle inférieure ne comportent pas d'orifices situés sur la périphérie de la structure SPI nécessaire à la traversée des composants internes. En revanche, elle comporte des traversées pour les tuyauteries froides qui assurent l'alimentation haute pression du coeur, des pénétrations pour l'inspection en service ainsi qu'éventuellement pour les échangeurs à débordement pour l'évacuation de la puissance résiduelle. Dans le cas des réacteurs hybrides, elle comporte des traversées pour les pompes primaires.

Ces différences mises à part, l'ensemble des caractéristiques relatives à la structure SPI décrites plus haut en référence aux figures 2 et 5 s'applique également à un RNR à boucles.

La structure intégré SPI s'applique donc à tout type de réacteur nucléaire à neutrons rapides comportant une cuve principale présentant une paroi latérale de forme cylindrique et un fond bombé (de forme sensiblement sphérique ou torisphérique), la cuve renfermant :
- un coeur composé d'assemblages combustibles aptes à être refroidis par un fluide caloporteur,
- une structure unique mécanosoudée de supportage dudit coeur alimentant ledit coeur en fluide caloporteur,
- une pièce d'appui de forme annulaire et d'axe de symétrie identique à l'axe de symétrie de la paroi latérale, la pièce d'appui étant intégrée à la cuve principale et présentant une surface supérieure plane formant un appui sur lequel repose la partie inférieure plane de la dite structure de supportage.

Ce réacteur nucléaire (de type intégré ou à boucles) peut donc également présenter une ou plusieurs des caractéristiques ci-dessous, considérées individuellement ou selon toutes les combinaisons techniquement possibles :
- ladite structure de supportage comporte une pluralité de caissons communiquant des ouvertures permettant la circulation dudit fluide caloporteur à l'intérieur de ladite structure ;
- ladite structure de supportage comporte notamment un caisson périphérique et un caisson supérieur recevant lesdits assemblages combustibles dudit coeur ;
- ledit caisson périphérique est en appui sur ladite pièce d'appui de forme annulaire ;
- ladite structure de supportage comporte un orifice périphérique pour l'introduction d'une pompe primaire, de sorte que la pompe primaire refoule ledit fluide caloporteur dans ladite structure de supportage ;
- ladite structure comporte un espace de refoulement apte à recevoir ledit fluide refoulé par ladite pompe primaire.

## Revendications

1. Réacteur nucléaire à neutrons rapides comportant une cuve principale (100, 200, 300) renfermant :
- un coeur (4) composé d'assemblages combustibles (22) aptes à être refroidis par un fluide caloporteur (25, 105),
- des moyens de support (6, 61, 111) dudit coeur (4),
- une pompe (7, 83) pour la mise en circulation dudit fluide caloporteur (25, 105) dans ladite cuve principale (100, 200, 300),
ledit réacteur étant **caractérisé en ce que** lesdits moyens de support (6, 61, 111) comportent un premier orifice (15, 67) pour le passage de ladite pompe (7, 83), de sorte que ladite pompe (7, 83) refoule ledit fluide caloporteur (25, 105) dans lesdits moyens de support (6, 61, 111).

2. Réacteur nucléaire à neutrons rapides selon la revendication précédente **caractérisé en ce qu'**il comporte en outre un échangeur de chaleur intermédiaire (8, 68, 85) pour le refroidissement dudit fluide caloporteur (25, 105), ledit échangeur de chaleur comportant :
- une fenêtre d'entrée (19, 69, 96) pour l'entrée dudit fluide caloporteur (25, 105) après son échauffement au contact desdits assemblages combustibles (22) ;
- une fenêtre de sortie (27, 70, 97) pour la sortie dudit fluide caloporteur (25, 105) refroidi par un circuit de refroidissement secondaire ;
lesdits moyens de support (6, 61, 111) comportant un deuxième orifice (14, 66, 115) pour le passage dudit échangeur de chaleur intermédiaire (8, 68, 85).

3. Réacteur nucléaire à neutrons rapides selon la revendication précédente **caractérisé en ce que** ledit premier orifice (14, 66 115) et ledit deuxième orifice (15, 67) sont situés sur la périphérie desdits moyens de support (6, 61, 111).

4. Réacteur nucléaire à neutrons rapides selon l'une des revendications 2 à 3 **caractérisé en ce que** ladite pompe (7, 83) et ledit échangeur de chaleur intermédiaire (8, 85) comportent des moyens d'étanchéité de type joints segment/piston.

5. Réacteur nucléaire à neutrons rapides selon l'une des revendications 1 à 4 **caractérisé en ce que** lesdits moyens de support (6, 61, 111) traversent de part en part ladite cuve principale (100) de sorte que lesdits moyens de support (6, 61, 111) séparent ladite cuve principale (100) selon :
- un premier volume supérieur (51, 101) dans lequel circule ledit fluide caloporteur (25, 105) après son échauffement au contact desdits assemblages combustibles (22), et ;
- un deuxième volume inférieur (52, 102) dans lequel circule ledit fluide caloporteur (25, 105) avant son échauffement au contact desdits assemblages combustible (22), ladite pompe aspirant ledit fluide caloporteur (25, 105) dans ledit deuxième volume inférieur (52, 102).

6. Réacteur nucléaire à neutrons rapides selon la revendication 5 **caractérisé en ce qu'**il comporte un échangeur de chaleur intermédiaire (8, 68, 85) pour le refroidissement dudit fluide caloporteur (25, 105), ledit échangeur de chaleur comportant :
- une fenêtre d'entrée (19, 69, 96) pour l'entrée dudit fluide caloporteur (25, 105) après son échauffement au contact desdits assemblages combustibles (22) ;
- une fenêtre de sortie (27, 70, 97) pour la sortie dudit fluide caloporteur (25, 105) refroidi par un circuit de refroidissement secondaire ;
lesdits moyens de support (6, 61, 111) comportant un deuxième orifice (14, 66, 115) pour le passage dudit échangeur de chaleur intermédiaire (8, 68, 85) et ladite fenêtre d'entrée (19, 69, 96) dudit échangeur (8, 68, 85) se trouvant dans ledit premier volume supérieur (51, 101) et ladite fenêtre de sortie (27, 70, 97) se trouve dans ledit deuxième volume inférieur (52, 102).

7. Réacteur nucléaire à neutrons rapides selon l'une des revendications 1 à 6 **caractérisé en ce que** lesdits moyens de support (6) du coeur sont formés par un platelage, ledit platelage (6) comportant une semelle supérieure (12) sur laquelle un sommier (5) repose en appui.

8. Réacteur nucléaire à neutrons rapides selon l'une des revendications 1 à 6 **caractérisé en ce que** lesdits moyens de support (61) du coeur sont formés par une structure mécano-soudée unique assurant à la fois la fonction de supportage dudit coeur (4) et la fonction d'alimentation dudit coeur (4) en fluide caloporteur (25), ladite structure comportant une semelle supérieure (62).

9. Réacteur nucléaire à neutrons rapides selon la revendication 8 **caractérisé en ce que** ladite structure mécano-soudée unique (61) est formée par une pluralité de viroles concentriques (64) solidarisées par des voiles radiaux (65) formant des entretoises rigidifiant ladite structure mécano-soudée (61).

10. Réacteur nucléaire à neutrons rapides selon l'une des revendications 7 à 9 **caractérisé en ce que** ladite semelle supérieure (12, 62, 112) sépare de façon étanche ledit premier volume supérieur (51, 101) dudit deuxième volume inférieur (52, 102).

11. Réacteur nucléaire à neutrons rapides selon l'une des revendications 1 à 10 **caractérisé en ce que** lesdits moyens de support (6, 61, 111) sont en appui sur une bride annulaire (24, 104) solidaire de la partie cylindrique de ladite cuve principale (100).

12. Réacteur nucléaire à neutrons rapides selon l'une des revendications 1 à 11 **caractérisé en ce que** ladite pompe (7) refoule ledit fluide caloporteur dans une zone de refoulement (73), ladite zone de refoulement (73) communiquant avec un espace annulaire (16) comportant des orifices (17, 72) en périphérie permettant l'alimentation dudit coeur (4) en fluide caloporteur (25).

13. Réacteur nucléaire à neutrons rapides selon l'une des revendications 1 à 12 **caractérisé en ce que** ledit réacteur comporte une virole périphérique (29, 109) logée à l'intérieur de ladite cuve principale (100, 200, 300) et délimitant avec la paroi interne de ladite cuve principale (100, 200, 300) un collecteur de forme annulaire (28, 108) dans lequel circule ledit fluide caloporteur (25 105), ladite circulation dudit fluide permettant de refroidir ladite cuve principale (100, 200, 300).

14. Réacteur nucléaire à neutrons rapides selon la revendication 13 **caractérisé en ce que** ledit réacteur comporte une deuxième virole périphérique (30, 110) délimitant avec ladite virole périphérique (29, 109) un espace annulaire de restitution (31, 107).

15. Réacteur nucléaire à neutrons rapides selon la revendication 14 **caractérisé en ce que** ledit espace annulaire de restitution (31, 107) est en communication avec ledit premier volume supérieur (51, 101) ou avec un deuxième espace annulaire (84) délimité par une virole interne (82) solidaire desdits moyens de supports (111).

## Claims

1. A fast neutron reactor comprising a main vessel (100, 200, 300) containing:
- a core (4) composed of fuel assemblies (22) that can be cooled by a coolant (25, 105),
- means (6, 61, 111) of supporting said core (4),
- a pump (7, 83) for circulating said coolant (25, 105) in said main vessel (100, 200, 300),
said reactor being **characterized in that** said support means (6, 61, 111) comprise a first opening (15, 67) for the passage of said pump (7, 83), such that said pump (7, 83) delivers said coolant (25, 105) into said support means (6, 61, 111).

2. The fast neutron reactor according to the previous claim **characterized in that** the reactor also comprises an intermediate heat exchanger (8, 68, 85) for cooling said coolant (25, 105), said heat exchanger comprising:
- an inlet window (19, 69, 96) for the inlet of said coolant (25, 105) after its heating in contact with said fuel assemblies (22);
- an outlet window (27, 70, 97) for the outlet of said coolant (25, 105) cooled by a secondary cooling circuit;
said support means (6, 61, 111) comprising a second opening (14, 66, 115) for the passage of said intermediate heat exchanger (8, 68, 85).

3. The fast neutron reactor according to the previous claim **characterized in that** said first opening (14, 66, 115) and said second opening (15, 67) are situated on the periphery of said support means (6, 61, 111).

4. The fast neutron reactor according to one of claims 2 to 3 **characterized in that** said pump (7, 83) and said intermediate heat exchanger (8, 85) comprise sealing means of the segment/piston joint type.

5. The fast neutron reactor according to one of claims 1 to 4 **characterized in that** said support means (6, 61, 111) traverse said main vessel (100) from one side to another such that said support means (6, 61, 111) separate said main vessel (100) along:
- a first upper volume (51, 101) in which said coolant (25, 105) circulates after its heating in contact with said fuel assemblies (22), and;
- a second lower volume (52, 102) in which said coolant (25, 105) circulates before its heating in contact with said fuel assemblies (22), said pump pumping said coolant (25, 105) into said second lower volume (52, 102).

6. The fast neutron reactor according to claim 5 **characterized in that** the reactor comprises an intermediate heat exchanger (8, 68, 85) for the cooling of said coolant (25, 105), said heat exchanger comprising:
- an inlet window (19, 69, 96) for the inlet of said coolant (25, 105) after its heating in contact with said fuel assemblies (22);
- an outlet window (27, 70, 97) for the outlet of said coolant (25, 105) cooled by a secondary cooling circuit;
said support means (6, 61, 111) comprising a second opening (14, 66, 115) for the passage of said intermediate heat exchanger (8, 68, 85) and said inlet window (19, 69, 96) of said exchanger (8, 68, 85) is found in said first upper volume (51, 101) and said outlet window (27, 70, 97) is found in said second lower volume (52, 102).

7. The fast neutron reactor according to one of claims 1 to 6 **characterized in that** said support means (6) of the core are formed by decking, said decking (6) comprising an upper flange (12) on which an end truck (5) rests.

8. The fast neutron reactor according to one of claims 1 to 6 **characterized in that** said core support means (61) are formed by a single mechanical welded structure ensuring both the function of supporting said core (4) and the function of supplying said core (4) with coolant (25), said structure comprising an upper flange (62).

9. The fast neutron reactor according to claim 8 **characterized in that** said single mechanical welded structure (61) is formed by a plurality of concentric rings (64) forming an integral connection with radial walls (65) forming spacers rigidifying said mechanical welded structure (61).

10. The fast neutron reactor according to one of claims 7 to 9 **characterized in that** said upper flange (12, 62, 112) sealingly separates said first upper volume (51, 101) from said second lower volume (52, 102).

11. The fast neutron reactor according to one of claims 1 to 10 **characterized in that** said support means (6, 61, 111) are resting on an annular connector (24, 104) integral with the cylindrical part of said main vessel (100).

12. The fast neutron reactor according to one of claims 1 to 11 **characterized in that** said pump (7) delivers said coolant into a discharge area (73), said discharge area (73) communicating with an annular space (16) comprising peripheral openings (17, 72) enabling coolant (25) to be supplied to said core (4).

13. The fast neutron reactor according to one of claims 1 to 12 **characterized in that** said reactor comprises a peripheral ring (29, 109) housed inside said main vessel (100, 200, 300) and defining with the inner wall of said main vessel (100, 200, 300) a collector in annular form (28, 108) in which said coolant (25, 105) circulates, said circulation of said coolant enabling said main vessel (100, 200, 300) to cool.

14. The fast neutron reactor according to claim 13 **characterized in that** said reactor comprises a second peripheral ring (30, 110) defining with said peripheral ring (29, 109) an annular delivery space (31, 107).

15. The fast neutron reactor according to claim 14 **characterized in that** said annular delivery space (31, 107) is in communication with said first upper volume (51, 101) or with a second annular space (84) defined by an inner ring (82) forming an integral part with said support means (111).

## Patentansprüche

1. Schneller Brütreaktor, der einen Hauptbehälter (100, 200, 300) aufweist, welcher enthält:
- einen Kern (4), der aus Brennelementbündeln (22) besteht, die geeignet sind, von einem Wärmeträgerfluid (25, 105) gekühlt zu werden,
- Mittel zur Abstützung (6, 61, 111) des Kerns (4);
- eine Pumpe (7, 83) zur Umwälzung des Wärmeträgerfluids (25, 105) in dem Hauptbehälter (100, 200, 300),
wobei der Brütreaktor **dadurch gekennzeichnet ist, dass** die Mittel zur Abstützung (6, 61, 111) eine erste Öffnung (15, 67) für die Durchführung der Pumpe (7, 83) aufweisen, derart, dass die Pumpe (7, 83) das Wärmeträgerfluid (25, 105) in die Mittel zur Abstützung (6, 61, 111) fördert.

2. Schneller Brütreaktor nach dem vorhergehenden Anspruch, **dadurch gekennzeichnet, dass** er außerdem einen Zwischenwärmetauscher (8, 68, 85) zur Kühlung des Wärmeträgerfluids (25, 105) aufweist, wobei der Wärmetauscher aufweist:
- ein Eintrittsfenster (19, 69, 96) für den Eintritt des Wärmeträgerfluids (25, 105) nach seiner Erwärmung beim Kontakt mit den Brennelementbündeln (22);
- ein Austrittsfenster (27, 70, 97) für den Austritt des durch einen Sekundärkühlkreislauf gekühlten Wärmeträgerfluids (25, 105);
wobei die Mittel zur Abstützung (6, 61, 111) eine zweite Öffnung (14, 66, 115) für die Durchführung des Zwischenwärmetauschers (8, 68, 85) aufweisen.

3. Schneller Brütreaktor nach dem vorhergehenden Anspruch, **dadurch gekennzeichnet, dass** sich die erste Öffnung (14, 66, 115) und die zweite Öffnung (15, 67) auf dem Umfang der Mittel zur Abstützung (6, 61, 111) befinden.

4. Schneller Brütreaktor nach einem der Ansprüche 2 bis 3, **dadurch gekennzeichnet, dass** die Pumpe (7, 83) und der Zwischenwärmetauscher (8, 85) Dichtmittel vom Typ von Segment-Kolben-Dichtungen aufweisen.

5. Schneller Brütreaktor nach einem der Ansprüche 1 bis 4, **dadurch gekennzeichnet, dass** die Mittel zur Abstützung (6, 61, 111) den Hauptbehälter (100) vollständig durchqueren, derart, dass die Mittel zur Abstützung (6, 61, 111) den Hauptbehälter (100) trennen in:
- ein erstes, oberes Volumen (51, 101), in welchem das Wärmeträgerfluid (25, 105) nach seiner Erwärmung beim Kontakt mit den Brennelementbündeln (22) zirkuliert; und
- ein zweites, unteres Volumen (52, 102), in welchem das Wärmeträgerfluid (25, 105) vor seiner Erwärmung beim Kontakt mit den Brennelementbündeln (22) zirkuliert, wobei die Pumpe das Wärmeträgerfluid (25, 105) in das zweite, untere Volumen (52, 102) saugt.

6. Schneller Brütreaktor nach Anspruch 5, **dadurch gekennzeichnet, dass** er einen Zwischenwärmetauscher (8, 68, 85) zur Kühlung des Wärmeträgerfluids (25, 105) aufweist, wobei der Wärmetauscher aufweist:
- ein Eintrittsfenster (19, 69, 96) für den Eintritt des Wärmeträgerfluids (25, 105) nach seiner Erwärmung beim Kontakt mit den Brennelementbündeln (22);
- ein Austrittsfenster (27, 70, 97) für den Austritt des durch einen Sekundärkühlkreislauf gekühlten Wärmeträgerfluids (25, 105);
wobei die Mittel zur Abstützung (6, 61, 111) eine zweite Öffnung (14, 66, 115) für die Durchführung des Zwischenwärmetauschers (8, 68, 85) aufweisen und das Eintrittsfenster (19, 69, 96) des Wärmetauschers (8, 68, 85) sich in dem ersten, oberen Volumen (51, 101) befindet und das Austrittsfenster (27, 70, 97) sich in dem zweiten, unteren Volumen (52, 102) befindet.

7. Schneller Brütreaktor nach einem der Ansprüche 1 bis 6, **dadurch gekennzeichnet, dass** die Mittel zur Abstützung (6) des Kerns von einer Plattenstruktur gebildet werden, wobei die Plattenstruktur (6) ein oberes Plateau (12) aufweist, auf welchem ein Träger (5) abgestützt ist.

8. Schneller Brütreaktor nach einem der Ansprüche 1 bis 6, **dadurch gekennzeichnet, dass** die Mittel zur Abstützung (61) des Kerns von einer einzigen mechanisch geschweißten Konstruktion gebildet werden, welche gleichzeitig die Funktion der Abstützung des Kerns (4) und die Funktion der Versorgung des Kerns (4) mit Wärmeträgerfluid (25) erfüllt, wobei diese Konstruktion ein oberes Plateau (62) aufweist.

9. Schneller Brütreaktor nach Anspruch 8, **dadurch gekennzeichnet, dass** die einzige mechanisch geschweißte Konstruktion (61) von mehreren konzentrischen Ringen (64) gebildet wird, die durch radiale Arme (65) fest miteinander verbunden sind, die Abstandshalter bilden, welche die mechanisch geschweißte Konstruktion (61) versteifen.

10. Schneller Brütreaktor nach einem der Ansprüche 7 bis 9, **dadurch gekennzeichnet, dass** das obere Plateau (12, 62, 112) das erste, obere Volumen (51, 101) von dem zweiten, unteren Volumen (52, 102) auf eine dichte Weise trennt.

11. Schneller Brütreaktor nach einem der Ansprüche 1 bis 10, **dadurch gekennzeichnet, dass** die Mittel zur Abstützung (6, 61, 111) auf einem ringförmigen Flansch (24, 104) abgestützt sind, der mit dem zylindrischen Teil des Hauptbehälters (100) fest verbunden ist.

12. Schneller Brütreaktor nach einem der Ansprüche 1 bis 11, **dadurch gekennzeichnet, dass** die Pumpe (7) das Wärmeträgerfluid in einen Druckbereich (73) fördert, wobei der Druckbereich (73) mit einem Ringraum (16) kommuniziert, der Öffnungen (17, 72) am Umfang aufweist, welche die Versorgung des Kerns (4) mit Wärmeträgerfluid (25) ermöglichen.

13. Schneller Brütreaktor nach einem der Ansprüche 1 bis 12, **dadurch gekennzeichnet, dass** der Brütreaktor einen Umfangsring (29, 109) aufweist, der im Inneren des Hauptbehälters (100, 200, 300) aufgenommen ist und mit der Innenwand des Hauptbehälters (100, 200, 300) ein ringförmiges Sammelgefäß (28, 108) begrenzt, in welchem das Wärmeträgerfluid (25, 105) zirkuliert, wobei die Zirkulation dieses Fluids ermöglicht, den Hauptbehälter (100, 200, 300) zu kühlen.

14. Schneller Brütreaktor nach Anspruch 13, **dadurch gekennzeichnet, dass** der Brütreaktor einen zweiten Umfangsring (30, 110) aufweist, der mit dem Umfangsring (29, 109) einen ringförmigen Wiederherstellungsraum (31, 107) begrenzt.

15. Schneller Brütreaktor nach Anspruch 14, **dadurch gekennzeichnet, dass** der ringförmige Wiederherstellungsraum (31, 107) mit dem ersten, oberen Volumen (51, 101) oder mit einem zweiten Ringraum (84), der von einem mit den Mitteln zur Abstützung (111) fest verbundenen Innenring (82) begrenzt wird, kommuniziert.
